# EUROPEAN PATENT APPLICATION

(11) **EP 1 634 929 A1**
(43) Date of publication of application: **15.03.2006**
(21) Application number: 04077517.3
(22) Date of filing: 13.09.2004
(51) Int. Cl.: C09D 7/00, C09D 7/12, B05D 5/00, C08J 7/04

(54) **Objet comprising a non-insulative coating**

(71) Applicant: DSM IP Assets B.V., 6411 TE Heerlen (NL)
(72) Inventor: Currie, Edwin Peter Kennedy, 6133 AM Sittard (NL); Thies, Jens Christoph, 6229 AL Maastricht (NL); Meijers, Guido Jozefina Wilhelmus, 6171 NL Stein (NL); Ulrich Audrey, 07200 Aubenas (FR)
(74) Representative: Hermans, Edith E.H.

(57) **Abstract**

The invention relates to a coated object comprising a porous coating and an electrically non-insulative coating and a substrate, wherein the porous coating is on top of the non-insulative coating. The surface resistivity of the coated device is not increased by more than a factor of 8 by the presence of the porous layer in comparison to that of the single electrically non-insulative coating on the same substrate. This coated object may demonstrate anti-reflective - anti-static or anti-glare - anti-static properties.

## Description

The invention relates to an object comprising a non-insulative coating. Objects like electronic devices are increasingly made of plastic components and the electrically sensitivity of the microchips increases steadily. This results in an increasing need for electric conductance of coated plastic objects, so that or electric protection and safety for the internal microchips is obtained. Typically these properties are attained in two ways, although there are more techniques, namely by usage of vapor deposition, chemical deposition or sputtering of metallic or semi-conductive materials, for instance described in "Large area glass coating" Von Ardenne Anlagentechnik, 2000 by Gläser.

The second approach is to include metallic or conductive species in an organic biner, which makes for instance wet coating deposition possible. Such species may include semi-conductive metallic oxides, see for example US-2003/0173545, electrical conductive polymers, see for example WO 00/17119, ionic species, see for example US-5110669 or metallic carbon species, see for example US-2003/024798.

A problem is that the anti-static or electrical conductive coatings are often not the most outer layer of a coated object. For example, in electronic displays, which are for example used in personal computers, televisions, mobile telephones etc. generally a coating with lower refractive index is deposited on the anti-static coating to reduce the reflectance of the display surface. This is for instance described in JP-A-2002298666. This method of over-coating leads to a decrease in electrical conductive properties of the object, which is undesired.

Aim of the present invention is to overcome this problem. Therefore the invention relates to an object comprising a non-insulative coating, which object comprises a porous coating on top of the non-insulative coating. Although the porous coating comprises only insulative species, via its structuring it does not or does hardly affect electrical properties as for example surface resistivity of the coated object, in contrast to a non-porous coating. The advantage of this is that the functionality of the top layer, be it for example optical, mechanical or for wetting purposes, is combined with the electrical properties of the coated device.

In JP 2001255403-A an object is disclosed comprising a non-insulative coating and a coating comprising microparticles, wherein micro-voids are formed. However the coating comprising the micro-voids is not on top of the non-insulative coating as a hard coat is in between the coating comprising the micro-voids and the non-insulative layer. Therefore the surface resistivity of the object is adversely affected.

### Electrical non-insulative coating

Within the scope of the invention, the electrical non-insulative coating may comprise any material, under the condition that the surface resistivity of the non-insulative coating, without any coating on top of that, is below 10¹¹, preferably below 10¹⁰, more preferably below 10⁹ Ω/square. Examples of non-insulative coatings are coatings comprising antimony doped tin oxide (ATO) or indium doped tin oxide (ITO), thin metal coating, or coatings comprising metallic carbon nanotubes.

The coatings can be deposited by any manner known to the skilled artisan. This may include chemical, plasma or other vapor deposition methods, sputtering, wet coating, microprinting, transfer of layers etc.

In the case of application of the coated object as an anti-static - antireflective or anti-static - antiglare object, for example for use in displays, those versed in the art will recognize the necessity of a transparent or weakly light-absorbing non-insulative coating.

### Porous coating

The porous coating may comprise any material species, provided that the porous structure of the coating is obtained. A porous material has a lower density than the material not being in the porous state but further having the same composition. Preferably the porous structure is in open connection with the outside world, so that gases or liquids are able to penetrate in the pores. This in contrasts to for example closed foam cells, which have the shape of gas bubbles being entrapped in for example a polymeric matrix. Preferably the surface resistivity of the coated object is not increased by more than a factor of 8, more preferably by not more than a factor of 4, most preferably by not more than a factor of 2, by the presence of the porous coating in comparison to that of object, not yet comprising the porous coating.

The increase in surface resistivity is relatively low if the porous coating has a low layer thickness, has a high volume fraction of pores.

Preferably the porous coating is a coating having anti-reflective properties.

In a first embodiment the coating composition for the preparation of the porous coating comprises micro- or nanoparticles, a solvent and further components, the further components in an amount low enough so that the porous structure is formed. The formation of such a structure is evident, because a lower decrease in surface resistivity is obtained. Most preferably a porous coating comprising nanoparticles is used. The particles may be either organic or inorganic by nature. Preferably inorganic particles are used as these may result in a hard coating. In a preferred embodiment the micro- or nanoparticles have compounds comprising chemically reactive groups grafted to their surface. Such reactive groups can form chemical bonds upon stimulation.

The compounds comprising the reactive groups may be grafted to the surface of the particles via groups for grafting. Examples of groups for grafting include silane groups, thiol groups, amine groups and silane hydride groups.

Reactive groups may be used that may react with the substrate and/or react to form a cross-linked phase so to form a coating comprising the particles. It is possible that a single species of reactive groups is used, able to mutually react, for example in a homo polymerisation reaction. Examples of such reactive groups include acrylate and methacrylate groups. Another possibility is that a mixture of groups is used, for example groups that are able to react in a copolymerisation reaction. Examples of such groups include carboxylic acids and/or carboxylic anhydrides combined with epoxies, acids combined with hydroxy compounds, especially 2-hydroxyalkylamides, amines combined with isocyanates, for example blocked isocyanate, uretdion or carbodiimide, epoxies combined with amines or with dicyandiamides, hydrazinamides combined with isocyanates, hydroxy compounds combined with isocyanates, for example blocked isocyanate, uretdion or carbodiimide, hydroxy compounds combined with anhydrides, hydroxy compounds combined with (etherified) methylolamide ("amino-resins"), thiols combined with isocyanates, thiols combined with acrylates or other vinylic species (optionally radical initiated), acetoacetate combined with acrylates, and when cationic cross-linking is used epoxy compounds with epoxy or hydroxy compounds. Addition reactions such as 2+2 photo cyclo addition and 4+2 thermal addition are also possible.

The coating composition used for the preparation of the porous coating of the object according to the invention may comprise particles of all kind of shapes. In a first embodiment the particles are spherical, in a more preferred embodiment the particles are non-spherical. Micro particles may have an average largest diameter between 15 and 0.5 microns. Nano particles may have an average largest diameter of between 500 and 5 nanometer (nm). Preferably the average largest diameter of the particles is less than 10 micron, preferably less than 1 micron. Still more preferably the average largest diameter of the particles is less than 100 nm, still more preferably less than 50 nm.

In the case of spherical particles there is only one diameter to consider, so that the largest diameter is equal to the diameter. For non-spherical particles (for instance but not limited to rods, platelets) the largest diameter is measured as the largest straight line drawn across the particle. Methods for determining the particle dimensions include optical microscopy, scanning microscopy and atomic force microscopy (AFM). If a microscopical method is used the dimensions of 100 randomly chosen particles are measured and the average is calculated. Examples of suitable inorganic particles are particles that comprise SiO₂, TiO₂, ZnO₂, TiO₂, SnO₂, In-SnO₂, ZrO₂, Sb-SnO₂, and Al₂O₃.

### Reactive diluents

In a more preferred embodiment the coating composition for the preparation of the porous coating comprises one or more reactive diluents, defined as species that have at least one group capable of polymerising into a network, preferably the network formed by the particles. The reactive diluent may be used, as long as the amount of reactive diluent is that low that the porous structure is maintained, resulting in the lower decrease of surface resistivity. If a reactive diluent is used in such amounts the coating usually shows improved mechanical properties and yet does not or does hardly affect the surface resistivity.

In principle a wide variety of materials are suitable to be used as the reactive diluent, for example monomers or oligomers having cross-linking groups. The mixture may comprise compounds that cross-link by themselves , such as for example different acrylates or it may comprise compounds that will not cross-link by itself but which form a cross-linked phase in combination with another compound after initiation of the cross-linking reaction, for example copolymerising systems comprising electron rich and electron poor double bonds such as for example maleate/vinyl ether copolymerising systems.

Possible compounds that may be used as the reactive diluent are moisture curable isocyanates, alkoxy titanates, alkoxy zirconates, or urea-, urea/melamine-, melamine- formaldehyde or phenol-formaldehyde (resol, novolac types), or radical curable (peroxide- or photo-initiated) ethylenically unsaturated mono-and polyfunctional monomers and polymers, (acrylates, methacrylates, maleate/vinyl ether), or radical curable (peroxide- or photo-initiated) unsaturated e.g. maleic or fumaric, polyesters in styrene and/or in methacrylates.

### Method for cross-linking or polymerisation

In principle any cross-linking method that may cause the composition for the preparation of the porous coating to cross-link so that a cross-linked coating is formed is suitable to be used in the process according to the invention. Suitable ways to initiate cross-linking are for example electron beam radiation, electromagnetic radiation (UV, Visible light and Near IR), thermally and by adding moisture, in case moisture curable compounds are used. In a preferred embodiment cross-linking is achieved by UV-radiation. This UV-cross-linking may take place through a free radical mechanism or by a cationic mechanism, or a combination thereof. In another preferred embodiment the cross-linking is achieved thermally. Also combinations of different cure methods are possible.

### Initiator

An initiator may be present in the mixture to initiate the cross-linking reaction. The amount of initiator may vary between wide ranges. A suitable amount of initiator is for example between above 0 and 5 wt% with respect to total weight of the compounds that take part in the cross-linking reaction.

When UV-cross-linking is used to initiate cross-linking, the mixture preferably comprises one or more UV-photo-initiators. A photo-initiator is capable of initiating a cross-linking reaction upon absorption of light. Thus, UV-photo-initiators absorb light in the Ultra-Violet region of the spectrum. Any known UV-photo-initiators may be used in the process according to the invention.

### Solvent

In principle, a wide variety of solvents may be used in the coating composition comprising the micro- or nanoparticles. The solvent preferably has the ability to form stable suspensions of the particles in order to obtain good quality coatings i.e. after evaporation of the solvent. Particles typically are added to the mixture in the form of a suspension. The same solvent as used in the suspension may be used to adjust the composition so that it has the desired properties. However, other solvents may also be used.

Preferably the solvent used evaporates after applying the composition onto the object. In the process according to the invention, optionally the composition may after application to the object be heated or treated in vacuum to aid evaporation of the solvent.

Examples of solvent that may be suitable are 1,4-dioxane, acetone, acetonitrile, chloroform, chlorophenol, cyclohexane, cyclohexanone, cyclopentanone, dichloromethane, diethyl acetate, diethyl ketone, dimethyl carbonate, dimethylformamide, dimethylsulphoxide, ethanol, ethyl acetate, m-cresol, mono- and di-alkyl substituted glycols, N,N-dimethylacetamide, p-chlorophenol, 1,2-propanediol, 1-pentanol, 1-propanol, 2-hexanone, 2-methoxyethanol, 2-methyl-2-propanol, 2-octanone, 2-propanol, 3-pentanone, 4-methyl-2-pentanone, hexafluoroisopropanol, methanol, methyl acetate, methyl acetoacetate, methyl ethyl ketone, methyl propyl ketone, n-methylpyrrolidone-2, n-pentyl acetate, phenol, tetrafluoro-n-propanol, tetrafluoroisopropanol, tetrahydrofuran, toluene, xylene and water. Alcohols, ketones and esters based solvents may also be used, although the solubility of acrylates may become an issue with high molecular weight alcohols. Halogenated solvents (such as dichloromethane and chloroform) and hydrocarbons (such as hexanes and cyclohexanes), may also be suitable. Preferably methanol, methyl ethyl keton or isopropanol is used.

### Adhesion promoters

The composition for the preparation of the porous coating, preferably comprise one or more compounds that increase the adhesion of the coating to the electrically non-insulative coating. These may be for example silane acrylate compounds for usage of acrylate-containing coatings on an inorganic sputtered coating. The skilled artisan will be able to select a suitable adhesion promotor for the desired substrate and the processing steps necessary to obtain good adhesion.

In another embodiment species resulting in an inorganic network may also be used in a composition for the preparation of a porous coating. These are for instance but not limited to alkoxy silanes or hydroxy silanes. Also combinations of organic and inorganic reactive species are possible. It is also possible that a porous coating obtained by vapor deposition is used.

### Coating thickness

The porous coating may be prepared in any desired thickness. The coatings may have a thickness ranging between 50 nm to tens of micrometers. In the case that the coating has an optical function, for example an anti-reflection layer, the thickness preferably is 50 - 150 nm.

### Application of the formulation of the porous coating to a substrate

The coating composition may be applied onto the object by one of the processes known in the art of dry and wet coating deposition in one or in multiple steps. Examples of suitable processes are chemical or physical vapor deposition, spin coating, dip coating, spray coating, flow coating, meniscus coating, capillary coating and roll coating. An object may be totally coated or partially coated. Also partial cross-linking of the coating and removal of the non-cross-linked part is possible, by for instance but not limited to photolithography, so that a porous coating is obtained.

After application and curing of the coating, further processing steps such as for example a heat treatment or radiation treatment is possible.

### Objects

A wide variety of objects may be coated to obtain the object according to the invention. Suitable objects are for example flat or curved, rigid or flexible substrates including films of for example polycarbonate, polyester, polyvinyl acetate, polyvinyl pyrollidone, polyvinyl chloride, polyimide, polyethylene naphthalate, polytetrafluoro ethylene, nylon, polynorbornene or amorphous solids, for example glass or crystalline materials, such as for example silicon or gallium arsenide.

Objects according to the invention include films for use in electronic displays, but also non-electronic optical components like for example lenses, covers for instrument panels and architectures glazing.

### Examples

### Antimony-doped Tin Oxide nano-particles

Antimony-doped tin oxide nanoparticles (spherical) were obtained from LWB b.v. Eindhoven, The Netherlands. These particles were used in illustration of the invention. Their properties and properties of the suspension are listed in table 1 below.

**Table1. Properties of Antimony-doped Tin Oxide particles**

| Suspensions | Particle Size (nm) | ATO (wt%) | pH | Cotor | Specific Gravity | Particle Shape | Solvent |
|---|---|---|---|---|---|---|---|
| ATO 9% MP | 7 | 9 | ≥4-7≤ | blue | 6.8 | Spherical | Methoxypropanol |

### Nano-silica particles

Nano-silica particles IPA-ST-UP (elongated particles) and MT-ST (spherical particles) were obtained from Nissan Chemical American Corporation. These particles were used in illustration of the invention. Their properties and properties of the suspension are listed in table 2 below.

**Table2. Type and properties of nano-silica particles**

| Nano-particle | Particle Size (nm) | SiO₂ (wt%) | H₂O (%) | Viscosity (mPa.s.) | Specific Gravity | pH | Particle Shape | Solvent |
|---|---|---|---|---|---|---|---|---|
| MT-ST | 10-15 | 30-31 | < 2.0 | < 5 | 0.98-1.02 | 2-4 | Spherical | Methanol |
| IPA-ST-UP | 9-15 Elongated* | 15-16 | < 1.0 | < 20 | 0.85-0.90 | 2-4 | Elongated * | Isopropanol |

| | | | | | | | | |
|---|---|---|---|---|---|---|---|---|
| *Elongated particles have a diameter of 9-15 nm with a length of 40-300 nm. (Information source www.snowtex.com). | | | | | | | | |

### Grafting of nano-silica particles

Reactive organic groups were grafted onto the silica nano-oxide particles by adding a trimethoxy-silane compound comprising an acrylate group (Int-12A, see formula I) together with hydroquinone mono-methyl ether, a compound that inhibits polymerization of the acrylate groups, to a suspension of the oxide particles. Table 3 shows the exact amounts of chemicals used. After stirring, a catalytic amount of water was added to the mixture and the mixture was refluxed at 80°C for at least 3 hours. Subsequently a dehydrating agent, trimethyl orthoformate, was added to remove any traces of water, and the resultant mixture stirred at 60°C for at least one hour.

**Table 3. Compounds in weight percentage used for surface modification of silica nanoparticles**

| Material | Modified spherical nanoparticles (Acry-MT-ST) | Modified elongated nanoparticles (Acry-IPA-ST-UP) |
|---|---|---|
| MT-ST nanoparticles | 24.75wt-% | |
| IPA-ST-UP elongate nanoparticles | | 13.85wt-% |
| Int-12A (coupling agent, see formula I) | 7.84 wt-% | 4.55wt-% |
| Hydroquinone mono-methyl ether (HQMME polymerisation inhibitor) | 0.14 wt-% | 0.87 wt-% |
| Methyltrimethoxysilane (surface derivatisation agent) | 1.23% wt-% | 0.72 wt-% |
| Methanol (solvent) | 57.75 wt-% | |
| Isopropanol (solvent) | | 75.31 wt-% |
| Trimethyl orthoformate (dehydrating agent) | 8.29 wt-% | 4.70 wt-% |
| Total | 100 wt-% | 100 wt-% |

### Preparation of a coating or film on a substrate

Thin films of various mixtures were prepared on polyethyleneterephthalate (PET) films by the following procedure.

A drop of a mixture (see table 4, 5 and 6 for the mixtures) was applied to the substrate by spin-coating at a rate of 2000 r.p.m. Thin films (100-300nm) were spin coated from mixtures containing less than 10wt-% solids while thicker (1-5 µm) coatings were roll coated from formulations with ca 35-50wt-% solids. The resultant wet film was cross-linked with UV radiation using a D-bulb under air or nitrogen at different doses. The thickness of the cross-linked transparent coatings were measured using TEM pictures of cross-sectioned samples.

### Formulation comprising ATO particles

A formulation for the preparation of a non-insulative coating comprising ATO particles was prepared by mixing the components as given in Table 4 below:

**Table 4. Formulation comprising A TO particles**

| Material | Formulation 1 |
|---|---|
| | g |
| ATO 9% MP (with solvent) | 4.17 |
| Methanol (solvent) | 0.125 |
| .Acry-MT-ST | 0.0625 |
| Dipentaerythritol pentaacrylate | 0.04 |
| Ethoxylated (9) trimethylolpropane triacrylate | 0.0225 |
| Methoxy Propanol (solvent) | 5.58 |
| Photoinitiator (Irgacure184 trademark by Ciba) | 0.0025 |

**Table 5. Formulations for producing porous coatings, comprising nano-silica particles**

| Material | Formulation 2 | Formulation 3 |
|---|---|---|
| Weight % of solid | 3wt-% | 5wt-% |
| | g | g |
| Acry-IPA-ST-UP (with solvent) | 15.5271 | 25.8786 |
| Dipentaerythritol pentaacrylate | 0.718 | 1.1966 |
| Trimethylolpropane tris(3-mercaptopropionate) | 0.1523 | 0.2538 |
| ID3 | 0.1536 | 0.2560 |
| Propyl gallate | 0.0059 | 0.0098 |
| Photoinitiator (Irgacure 907 trademark by Ciba) | 0.0268 | 0.0447 |
| MEK (solvent) | 83.4163 | 72.3605 |

**Table 6. Formulations for non-porous coatings.**

| | Formulation 4 | Formulation 5 |
|---|---|---|
| Weight % of solid | 3wt-% | 5wt-% |
| | g | 9 |
| PEG diacrylate (Mw : 700) | 0.3 | 0.5 |
| Methanol (solvent) | 9.7 | 9.5 |

### Preparation of a non-insulative coating

In the first step a standard hard coat is applied to the substrate to a thickness of ca 3-5 µm and cured in Air.

In the second step a coating according to formulation 1, table 4 is applied on top of the Hard coat to a thickness of 100 - 200nm by spin coating as described previously. The said coating is then fully cured with a total of 2 x 1 Jcm⁻².

### Example 1

In the first step, a non-insulative coating was prepared as described in "Preparation of a non insulative coating" above.

In the second step a nano-porous coating according to formulation 2, table 5 is applied on top of the non-insulative coating to a thickness of 100 - 200 nm by spin coating as described previously. The said coating is then fully cured with a total of 2 x 1Jcm⁻².

### Example 2

In the first step, a non-insulative coating was prepared as described in "Preparation of a non insulative coating".

In the second step a nano-porous coating according to formulation 3, table 5 is applied on top of the non insulative coating to a thickness of 300 - 500 nm by spin coating as described previously. The said coating is then fully cured with a total of 2 x 1 Jcm⁻².

### Experiments A & B : comparative experiments of second non-porous coating

### Experiment A

In the first step, a non insulative coating was prepared as described in "Preparation of a non insulative coating".

In the second step a non-porous coating according to formulation 4, table 6 is applied on top of the non insulative coating to a thickness of 100 - 200 nm by spin coating as described previously. The said coating is then fully cured with a total of 2 x 1Jcm⁻².

### Experiment B

In the first step, a non insulative coating was prepared as described in "Preparation of a non insulative coating".

In the second step a non-porous coating according to formulation 5, table 6 is applied on top of the non insulative coating to a thickness of 300 - 500 nm by spin coating as described previously. The said coating is then fully cured with a total of 2 x 1 Jcm⁻².

### Electrical properties of coatings

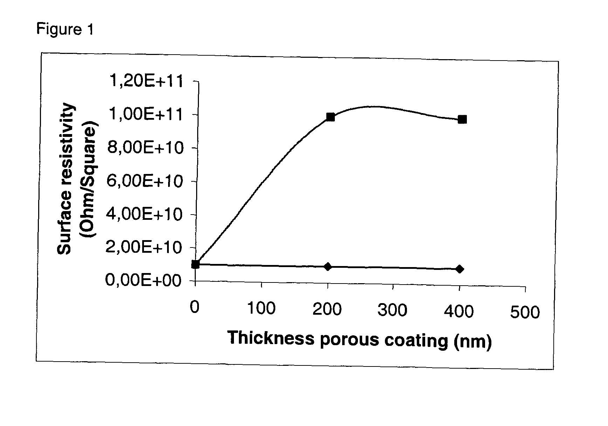

*Surface resistivity of the coatings was measured with the "concentric-ring probe electrodes "method (ASTM 257), using a 6105 resistivity adapter, coupled with an electrometer (keithley 617). The results are given in table 7 and Fig.1. From the results it is clear that the nano-porous coating does not or hardly does affect the surface resistivity of the coated object, while the non-porous coating reduces it with a factor of about 10.*

**Table 7: Surface resistivity of examples and comparative experiments.**

| | Surface resistivity (Ω/square) |
|---|---|
| Non insulative coating | 10⁹ |
| Example 1 | 10⁹ |
| Example 2 | 10⁹ |
| Comparative experiment A | 10¹⁰ |
| Comparative experiment B | 10¹⁰ |

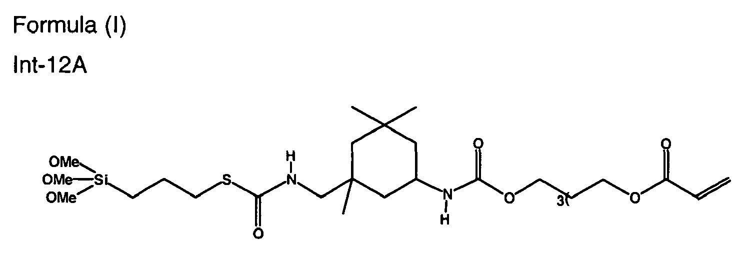

## Claims

1. A coated object comprising an electrically non-insulative coating, **characterised in that** a porous coating is on top of the non-insulative coating.

2. A coated object according to claim 1, wherein the surface resistivity of the coated object is not increased by more than a factor of 8 by the presence of the porous coating in comparison to that of object, not yet comprising the porous coating.

3. A coated device according to claim 1, wherein the surface resistivity of the coated object is not increased by more than a factor of 4

4. A coated device according to claim 1, wherein the surface resistivity of the coated object is not increased by more than a factor of 2.

5. A coated device according to any one of claims 1 - 4, wherein the porous coating has an open porous structure.

6. A coated device according to any one of claims 1 - 5, wherein the porous coating is prepared from a coating composition comprising micro- or nanoparticles, a solvent and further components, the further components in an amount low enough so that the porous structure is formed.

7. A coated object according to claim 6, wherein the micro particles or nano particles have compounds comprising chemically reactive groups grafted on their surface.

8. A coated object according to any one of claims 1-7, wherein the porous coating has anti-reflective properties.

9. Object according to any one of claims 1-8, which object is a film for use in an electronic display.

10. Object according to any one of claims 1-8, which object is a film for use in a non- electronic component.
